# EUROPEAN PATENT APPLICATION

(11) **EP 3 809 745 A1**
(43) Date of publication of application: **21.04.2021**
(21) Application number: 19822028.7
(22) Date of filing: 21.06.2019
(51) Int. Cl.: H04W 24/10

(54) **MEASUREMENT CONTROL METHOD AND APPARATUS, AND TERMINAL DEVICE**

(30) Priority: 21.06.2018 CN 201810645186
(71) Applicant: GUANGDONG OPPO MOBILE TELECOMMUNICATIONS CORP., LTD., Dongguan Guangdong 523860 (CN)
(72) Inventor: TANG, Hai, Dongguan, Guangdong 523860 (CN)
(74) Representative: Penza, Giancarlo
(86) International application number: PCT/CN2019/092258
(87) International publication number: WO 2019/242722

(57) **Abstract**

A measurement control method and apparatus, and a terminal device. A measurement start between MN and SN nodes can be coordinated. The method comprises: the terminal device receives first configuration information sent by a first node and second configuration information sent by a second node (401); in the case that the terminal device determines on the basis of the first configuration information and/or the second configuration information that the first node receives measurement request configuration information from the second node: if the terminal device activates a first measurement function of a second node side, the terminal device can activate a first measurement function of a first node side, wherein if the first measurement function is in an activated state, the terminal device performs measurement of a serving cell, but does not perform adjacent cell measurement between an inter-frequency cell, a co-frequency cell, and inter-RAT (402).

## Description

### Technical Field

Embodiments of the present application relate to the technical field of mobile communication, in particular, to a method and an apparatus for controlling measurement and a terminal device.

### Background

In order to satisfy people's pursuit of service rate, latency, high-speed mobility and energy efficiency, as well as to satisfy diversity and complexity of services in future life, the 3rd generation partnership project (3GPP) international standards organization began to research and develop 5-Generation mobile communication technology (5G).

The main application scenarios of 5G mobile communication technology are: Enhance Mobile Broadband (eMBB), Ultra Reliable Low Latency Communication (URLLC) and massive Machine Type Communication (mMTC).

The 5G mobile communication technology is also called New Radio technology (NR). In early deployment of NR, complete NR coverage is difficult to achieve, and thus typical network coverage is a combination of Long Term Evolution (LTE) coverage and NR coverage. In addition, in order to protect an early investment of mobile operators in LTE, a tight interworking mode between LTE and NR is proposed, that is, a Dual Connectivity (DC) mode. Of course, NR may be deployed independently.

In a DC, a Master Node (MN) and a Secondary Node (SN) independently configure measurement configuration information for a User Equipment (UE). The MN configures the measurement configuration information for the UE with an LTE RRC, and the UE reports a measurement report related to the configuration to the MN. In this configuration, all cells in a Mater Cell Group (MCG) are considered as serving cells, and other cells including a Secondary Cell Group (SCG) are considered as neighbor cells. The SN configures the measurement configuration information for the UE with an NR RRC, and the UE reports a measurement report related to the configuration to the SN. In this configuration, all cells of the SCG are considered as serving cells, and other cells including the MCG cells are considered as neighbor cells. A disadvantage of the above configurations is that repeated measurement objects may be configured on a same frequency point, and the UE is required to perform different measurements on a same carrier.

In LTE, an s-Measure is configured with a Reference Signal Receiving Power (RSRP) threshold. If a measured RSRP value of a current primary cell (PCell) is higher than the RSRP threshold, the UE will not perform a measurement of a neighbor cell of an intra-frequency cell, an inter-frequency cell, and an inter-Radio Access Technology (RAT) cell.

In MR-DC, an MN and an SN configure s-Measure independently. The s-Measure configured by the MN refers to a signal quality of PCell, and the s-Measure configured by the SN refers to a signal quality of PSCell.

As there will be coordination of measurements between the MN and the SN, for example, the MN may request the SN to configure some measurements, for example, for a MN handover. The SN may also request the MN to configure some measurements, etc. In addition, the UE will support DC architectures of various modes, thus these DC modes will switch between each other during movement of the UE. Therefore, the s-Measure mechanism of the current node will limit a measurement requirement from another node, so that mobility of another node is limited and triggered with a delay.

### Summary

Embodiments of the present application provide a method and an apparatus for controlling measurement, and a terminal device, which may coordinate a start of a measurement between a MN node and a SN node and achieve a purpose of improving mobile robustness.

An embodiment of the present invention provides a method for controlling measurement. The method includes that a terminal device receives first configuration information sent from a first node and second configuration information sent from a second node, and when determining, based on the first configuration information and/or the second configuration information, that the first node receives measurement request configuration information from the second node, the terminal device is able to activate the first measurement function on the first node side only when the terminal device activates a first measurement function on the second node side. Herein, when the first measurement function is in an active state, the terminal device performs a measurement of a serving cell, and does not perform a measurement of a neighbor cell of an inter-frequency cell, an intra-frequency cell, and an inter-RAT.

An embodiment of the present invention provides a method for controlling measurement. The method includes that a terminal device receives first configuration information sent from a first node and second configuration information sent from a second node, and determines a third measurement threshold value based on the first configuration information and/or the second configuration information, and when measurement results of a serving cell and a non-serving cell on the first node side are both less than the third measurement threshold value, deactivates a first measurement function on the second node side. Herein, after the first measurement function is deactivated, the terminal device performs a measurement of a neighbor cell of an inter-frequency cell, an intra-frequency cell, and an inter-RAT.

An embodiment of the present invention provides an apparatus for controlling measurement. The apparatus includes a receiving unit, a determination unit and a control unit.

Herein, the receiving unit is configured to receive first configuration information sent from a first node and second configuration information sent from a second node, the determination unit is configured to determine that the first node receives measurement request configuration information from the second node based on the first configuration information and/or the second configuration information, and the control unit is configured to activate a first measurement function on the first node side only when the first measurement function on the second node side is activated. Herein, when the first measurement function is in an active state, the terminal device performs a measurement of a serving cell, and does not perform a measurement of a neighbor cell of an inter-frequency cell, an intra-frequency cell, and an inter-RAT.

An embodiment of the present invention provides an apparatus for controlling measurement. The apparatus includes a receiving unit, a determination unit, and a control unit.

Herein, the receiving unit is configured to receive first configuration information sent from a first node and second configuration information sent from a second node, the determination unit is configured to determine a third measurement threshold value based on the first configuration information and/or the second configuration information, and the control unit is configured to deactivate a first measurement function on the second node side when measurement results of a serving cell and a non-serving cell on the first node side are both less than the third measurement threshold. Herein, after the first measurement function is deactivated, the terminal device performs a measurement of a neighbor cell of an inter-frequency cell, an intra-frequency cell, and an inter-RAT.

An embodiment of the present invention provides a terminal device. The terminal device includes a processor and a memory. The memory is configured to store a computer program, and the processor is configured to call and run the computer program stored in the memory to perform the method for controlling measurement described above.

An embodiment of the present invention provides a chip configured to perform the method for controlling measurement described above.

Specifically, the chip includes a processor configured to call and run a computer program from a memory and cause a device provide with the chip to perform the method for controlling measurement described above.

An embodiment of the present invention provides a computer readable storage medium configured to store a computer program, and the computer program causes a computer to perform the method for controlling measurement described above.

An embodiment of the present invention provides a computer program product including computer program instructions, and the computer program instructions cause a computer to perform the method for controlling measurement described above.

An embodiment of the present invention provides a computer program. When being run on a computer, the computer program causes the computer to perform the method for controlling measurement described above.

According to the above technical solutions, when a terminal is in a MR-DC mode, mobile robustness of the terminal is improved by coordinating whether a first measurement function between MN and SN nodes is activated.

### Brief Description of Drawings

FIG. 1 is a schematic diagram of an architecture of a communication system according to an embodiment of the present application.
FIG. 2 is an overall networking architecture diagram of EN-DC according to an embodiment of the present application;
FIG. 3 is a schematic diagram of an EN-DC connection structure according to an embodiment of the present application;
FIG. 4 is a first schematic flowchart of a method for controlling measurement according to an embodiment of the present application;
FIG. 5 is a second schematic flowchart of a method for controlling measurement according to an embodiment of the present application;
FIG. 6 is a schematic diagram of a composition structure of an apparatus for controlling measurement according to an embodiment of the present application.
FIG. 7 is a schematic diagram of a structure of a terminal device according to an embodiment of the present application.
FIG. 8 is a schematic diagram of a structure of a chip according to an embodiment of the present application.
FIG. 9 is a schematic block diagram of a communication system according to an embodiment of the present application.

### Detailed Description

Technical solutions in embodiments of the present application will be described below with reference to the drawings in the embodiments of the present application. It is apparent that the embodiments described are just some embodiments of the present application, but not all embodiments of the present application. According to the embodiments of the present application, all other embodiments achieved by a person of ordinary skill in the art without paying an inventive effort are within the protection scope of the present application.

The technical solutions of the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) system, a LTE Time Division Duplex (TDD) system, a Universal Mobile Telecommunication System (UMTS), a Worldwide Interoperability for Microwave Access (WiMAX) communication system, or a 5G system, etc.

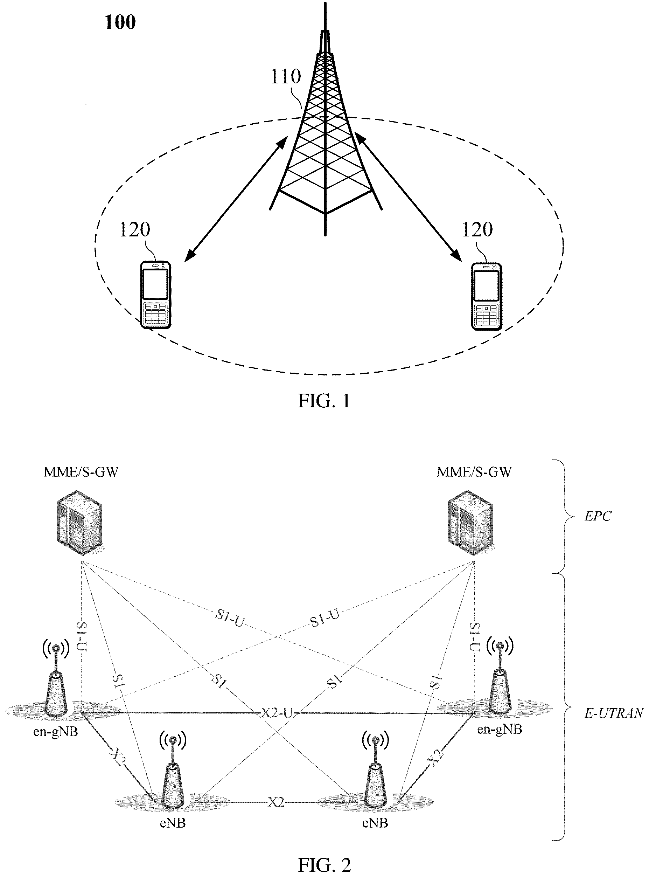

Illustratively, a communication system 100 applied in an embodiment of the present application is shown in FIG. 1. The communication system 100 may include a network device 110, and the network device 110 may be a device that communicates with a terminal device 120 (or referred to as a communication terminal, or a terminal). The network device 110 may provide communication coverage for a specific geographical area, and may communicate with terminal devices located within the coverage area. Optionally, the network device 110 may be a Base Transceiver Station (BTS) in a GSM system or CDMA system, a NodeB (NB) in a WCDMA system, an Evolutional Node B (eNB or eNodeB) in a LTE system, or a radio controller in a Cloud Radio Access Network (CRAN), or the network device may be a mobile switch center, a relay station, an access point, a vehicle-mounted device, a wearable device, a hub, a switch, a bridge, a router, or a network side device in a 5G network, or a network device in a future evolved Public Land Mobile Network (PLMN), etc.

The communication system 100 also includes at least one terminal device 120 located within the coverage area of the network device 110. As used herein, the term "terminal device" includes, but not limited to, a device configured to connect via a wired circuit, for example, via a Public Switched Telephone Network (PSTN), a Digital Subscriber Line (DSL), a digital cable, a direct cable; and/or another data connection/network; and/or via a wireless interface, for example, for a cellular network, a Wireless Local Area Network (WLAN), a digital television network such as a Digital Video Broadcasting-Handheld (DVB-H) network, a satellite network, and an AM-FM broadcast transmitter; and/or an apparatus, of another communication terminal, configured to receive/send a communication signal; and/or an Internet of Things (IoT) device. A terminal device configured to communicate via a wireless interface may be referred to as a "wireless communication terminal", a "wireless terminal" or a "mobile terminal". Examples of the mobile terminal include, but not limited to, a satellite or cellular telephone, a Personal Communication System (PCS) terminal capable of combining with a cellular wireless telephone and data processing, faxing, and data communication abilities, a Personal Digital Assistant (PDA) that may include a radio telephone, a pager, an internet/intranet access, a Web browser, a memo pad, a calendar, and/or a Global Positioning System (GPS) receiver, and a conventional laptop and/or palmtop receiver or other electronic apparatus including a radio telephone transceiver. The terminal device may be referred to an access terminal, a User Equipment (UE), a subscriber unit, a subscriber station, a mobile station, a mobile platform, a remote station, a remote terminal, a mobile device, a user terminal, a terminal, a wireless terminal device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device or a computing device with a wireless communication function, or other processing device connected to a wireless modem, a vehicle-mounted device, a wearable device, a terminal device in a 5G network, or a terminal device in a future evolved Public Land Mobile Network (PLMN), or the like.

Optionally, Device to Device (D2D) communication may be performed between the terminal devices 120.

Optionally, the 5G system or 5G network may be referred to as a New Radio (NR) system or a NR network.

FIG. 1 exemplifies one network device and two terminal devices. Optionally, the wireless communication system 100 may include multiple network devices, and other quantity of terminal devices may be included within a coverage area of each network device, which is not limited in embodiments of the present application.

Optionally, the communication system 100 may include other network entities such as a network controller, and a mobile management entity, which is not limited in embodiments of the present application.

It should be understood that, a device with a communication function in a network/system in an embodiment of the present application may be referred to as a terminal device. Taking the communication system 100 shown in FIG. 1 as an example, terminal devices may include a network device 110 and a terminal device 120 which have communication functions, and the network device 110 and the terminal device 120 may be the specific devices described above, which will not be repeated herein. Terminal devices may further include other devices in the communication system 100, for example, other network entities such as a network controller, a mobile management entity, which is not limited in the embodiments of the present application.

It should be understood that the terms "system" and "network" are often used interchangeably in this document. The term "and/or" in this document is merely an association relationship describing associated objects, indicating that there may be three relationships, for example, A and/or B may indicate three cases: A alone, A and B, and B alone. In addition, the symbol "/" in this document generally indicates that objects before and after the symbol "/" have an "or" relationship.

The technical solution of an embodiment of the present invention is mainly applied to a 5G mobile communication system. Of course, the technical solution of an embodiment of the present invention is not limited to be applied in a 5G mobile communication system, but may also be applied to other types of mobile communication systems. Main application scenarios in the 5G mobile communication system are described below.
1) eMBB scenario: eMBB aims to make a user obtain multimedia content, service and data, and service needs of eMMB are growing rapidly. Since eMBB may be deployed in different scenarios, such as indoor, urban and rural, and differences of service capabilities and requirements are quite large, thereby it is necessary to analyze the service in combination with specific deployment scenarios.
2) URLLC scenario: typical applications of URLLC include: industrial automation, power automation, telemedicine operation and traffic safety, etc.
3) eMTC scenario: typical characteristics of mMTC include: high connection density, small data volume, delay-insensitive service, low cost and long service life of module, etc.

5G and LTE may be combined to form a DC network architecture. Types of DC include EN-DC, NE-DC, 5GC-EN-DC and NR DC. In EN-DC, an LTE node serves as a Master Node (MN) and an NR node serves as a Secondary Node (SN), which connect with an EPC core network. In NE-DC, an NR node serves as a MN and an eLTE node serves as a SN, which connect with a 5GC core network. In 5GC-EN-DC, an eLTE node serves as a MN and an NR node serves as a SN, which connect with a 5GC core network. In NR DC, an NR node serves as a MN and a NR node serves as a SN, which connect with a 5GC core network.

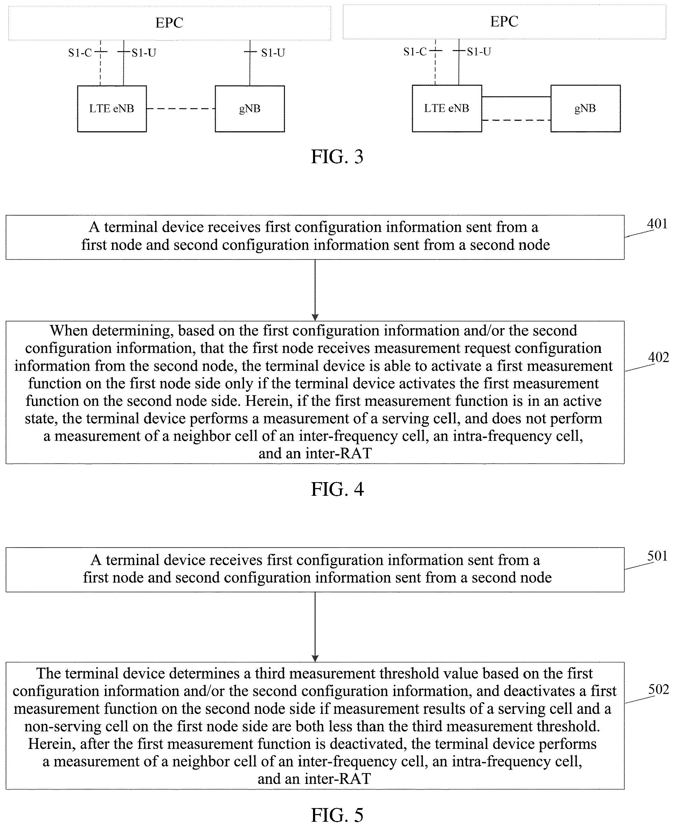

In order to perform a deployment and commercial application of 5G network as soon as possible, 3GPP completed a first 5G version, namely EN-DC (LTE-NR Dual Connectivity). Here, LTE serves as a MN and NR serves as a SN. The network deployment and networking architecture are shown in FIG. 2 and FIG. 3.

FIG. 4 is a schematic flowchart of a method for controlling measurement according to an embodiment of the present application. As shown in FIG. 4, the method for controlling measurement includes the following acts 401-402.

In act 401: a terminal device receives first configuration information sent from a first node and second configuration information sent from a second node.

In an embodiment of the present invention, the terminal device may be any device, such as a mobile phone, a tablet computer, a desktop computer, or a notebook computer etc., which is capable of communicating with network devices. Furthermore, the terminal device is a UE in an MR-DC mode, and an MN and an SN configure independent s-Measures for the UE in the MR-DC mode. Specifically, the MN configures s-Measure of an MN-side for the UE through RRC signaling from the MN side, while the SN configures s-Measure of an SN-side for the UE through RRC signaling from the SN side. Here, the s-Measure is carried in an IE of the RRC signaling, content of the s-Measure is a measurement threshold, which is used for the UE to measure a current primary cell, and a measurement result of the current primary cell is compared with the measurement threshold of s-Measure to decide whether to activate a first measurement function. Here, if the first measurement function is in an active state, the terminal device performs a measurement of a serving cell, and does not perform a measurement of a neighbor cell of an inter-frequency cell, an intra-frequency cell, and an inter-RAT.

In an embodiment of the present invention, the first node and the second node are two nodes in a DC network, and in one implementation, the first node is a Master node in the DC network, and the second node is a Secondary node in the DC network. In another implementation, the first node is a Secondary node in a DC network, and the second node is a Master node in the DC network.

In an embodiment of the present invention, the first node and the second node independently configure measurement configuration information for the terminal device, wherein the measurement configuration information configured for the terminal device by the first node is the first configuration information, and the measurement configuration information configured for the terminal device by the second node is the second configuration information. Contents included in the first configuration information or the second measurement configuration information are an object to be measured by the UE, a cell list, a reporting mode, a measurement identification, an event parameter, and the like. More importantly, the first configuration information further includes a first measurement threshold value (for example, the measurement threshold value of s-Measured is x), and the second configuration information further includes a second measurement threshold value (for example, the measurement threshold value of s-Measured is y). If the first configuration information is configured with the s-Measured, it means that the terminal device starts an s-Measured function on the first node side, and the terminal device needs to measure an RSRP of the master node on the first node side and compare a measurement result of the master node with the threshold value x. If the second configuration information is configured with s-Measured, it means that the terminal device starts the s-Measured function on the second node side, and the terminal device needs to measure an RSRP of the master node on the second node side and compare a measurement result of the master node with the threshold value y.

In act 402: when determining, based on the first configuration information and/or the second configuration information, that the first node receives measurement request configuration information from the second node, the terminal device may activate a first measurement function on the first node side only if the terminal device activates the first measurement function on the second node side. Herein, if the first measurement function is in an active state, the terminal device performs a measurement of a serving cell, and does not perform a measurement of a neighbor cell of an inter-frequency cell, an intra-frequency cell and an inter-RAT.

In an embodiment of the present invention, if the terminal device activates the first measurement function on the second node side, the terminal device may activate the first measurement function on the first node side only when a measurement result of a primary cell on the first node side is greater than or equal to the first measurement threshold. If the terminal device does not activate the first measurement function on the second node side or the measurement result of the primary cell on the first node side is less than the first measurement threshold value, the terminal device does not activate the first measurement function on the first node side. Herein, if the first measurement function is in an inactive state, the terminal device performs a measurement of a neighbor cell of an inter-frequency cell, an intra-frequency cell, and an inter-RAT.

In an implementation, if the MN node receives measurement request configuration information from the SN node, when the SN side activates an s-Measure function (i.e., the first measurement function), the MN side may activate the s-Measure function only if an RSRP of a Pcell on the MN side is greater than or equal to the threshold x. Otherwise, the MN side does not activate the s-Measure function.

In an implementation, if the SN node receives measurement request configuration information from the MN node, when the MN side activates an s-Measure function (i.e., the first measurement function), the SN side may activate the s-Measure function only if an RSRP of a PScell on the SN side is greater than or equal to the threshold y. Otherwise, the SN side does not activate the s-Measure function.

FIG. 5 is a schematic flowchart of a method for controlling measurement according to an embodiment of the present application. As shown in FIG. 5, the method for controlling measurement includes the following acts 501-502.

In act 501: a terminal device receives first configuration information sent from a first node and second configuration information sent from a second node.

In an embodiment of the present invention, the terminal device may be any device, such as a mobile phone, a tablet computer, a desktop computer, or a notebook computer etc., which is capable of communicating with network devices. Furthermore, the terminal device is a UE in an MR-DC mode, and an MN and an SN configure independent s-Measures for the UE in the MR-DC mode. Specifically, the MN configures an s-Measure of an MN-side for the UE through RRC signaling of the MN side, while the SN configures an s-Measure of an SN-side for the UE through RRC signaling of the SN side. Here, the s-Measure is carried in an IE in the RRC signaling, and a content of s-Measure is a measurement threshold value, which is used for the UE to measure a current primary cell and a measurement result of the current primary cell is compared with the measurement threshold value of the s-Measure to decide whether a first measurement function is activated. Here, if the first measurement function is in an active state, the terminal device performs a measurement of a serving cell, and does not perform a measurement of neighbor cell of an inter-frequency cell, an intra-frequency cell, and an inter-RAT.

In an embodiment of the present invention, the first node and the second node are two nodes in a DC network, and in an implementation, the first node is a Master node in the DC network, and the second node is a Secondary node in the DC network. In another implementation, the first node is a Secondary node in the DC network, and the second node is a Master node in the DC network.

In an embodiment of the present invention, the first node and the second node independently configure measurement configuration information for the terminal device, herein measurement configuration information configured for the terminal device by the first node is the first configuration information, and measurement configuration information configured for the terminal device by the second node is the second configuration information. The first configuration information or the second measurement configuration information includes an object to be measured by the UE, a cell list, a reporting mode, a measurement identification, an event parameter, and the like. More importantly, the first configuration information further includes a first measurement threshold value (for example, a measurement threshold value of s-Measured is x), and the second configuration information further includes a second measurement threshold value (for example, a measurement threshold value of s-Measured is y). If the first configuration information is configured with the s-Measured, it means that the terminal device starts an s-Measured function on the first node side, and the terminal device needs to measure an RSRP of a master node on the first node side and compare a measurement result of the master node with the threshold value x. If the second configuration information is configured with the s-Measured, it means that the terminal device starts an s-Measured function on the second node side, and the terminal device needs to measure an RSRP of a master node on the second node side and compare a measurement result of the master node with the threshold value y.

In act 502: the terminal device determines a third measurement threshold value based on the first configuration information and/or the second configuration information, and deactivates a first measurement function on a second node side if measurement results of a serving cell and a non-serving cell on a first node side are both less than the third measurement threshold. Herein, after the first measurement function is deactivated, the terminal device performs a measurement of a neighbor cell of an inter-frequency cell, an intra-frequency cell, and an inter-RAT.

In an embodiment of the present invention, if measurement results of a serving cell and a non-serving cell on the first node side are both less than the third measurement threshold, the first measurement function on the second node side is deactivated regardless of whether a measurement result of a primary cell on the second node side is greater than or equal to the second measurement threshold, or less than the second measurement threshold.

In an implementation, if measurement results of a serving cell and a non-serving cell on the MN side are less than the third measurement threshold a, then no matter a measurement result of a PScell on the SN side is less than the s-Measure threshold y or greater than the s-Measure threshold y, an s-Measure function on the SN side is triggered to be deactivated.

In an implementation, if measurement results of a serving cell and a non-serving cell on the SN side are both less than the third measurement threshold a, then no matter a measurement result of a Pcell on the MN side is less than or greater than the s-Measure threshold x, an s-Measure function on the MN side is triggered to be deactivated.

In the technical solution of an embodiment of the present invention, activation of the s-Measure function means that the UE only performs a measurement of a serving cell, and does not perform a measurement of a neighbor cell of an intra-frequency cell, an inter-frequency cell, and an inter-RAT. Inactivation of the s-Measure means that UE performs a measurement of a neighbor cell of an inter-frequency cell, an intra-frequency cell, and an inter-RAT.

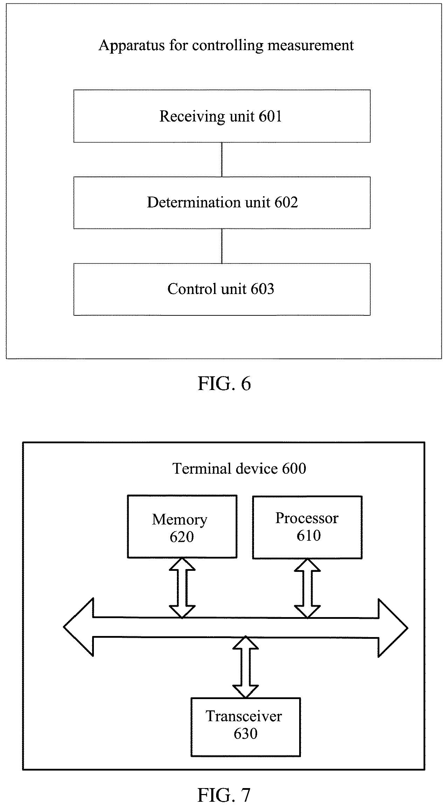

FIG. 6 is a schematic diagram of a composition structure of an apparatus for controlling measurement according to an embodiment of the present invention. As shown in FIG. 6, the device for controlling measurement includes a receiving unit 601, a determination unit 602, and a control unit 603.

In an implementation, the receiving unit 601 is configured to receive first configuration information sent from a first node and second configuration information sent from a second node.

The determination unit 602 is configured to determine that the first node receives measurement request configuration information from the second node based on the first configuration information and/or the second configuration information.

The control unit 603 is configured to be able to activate a first measurement function on the first node side only if a first measurement function on the second node side is activated; herein, if the first measurement function is in an active state, the terminal device performs a measurement of a serving cell, and does not perform a measurement of a neighbor cell of an inter-frequency cell, an intra-frequency cell, and an inter-RAT.

In an implementation, the first configuration information includes a first measurement threshold value, and the second configuration information includes a second measurement threshold value; if the control unit 603 activates the first measurement function on the second node side, the control unit 603 is able to activate the first measurement function on the first node side only when a measurement result of a primary cell on the first node side is greater than or equal to the first measurement threshold value.

In an implementation, if the control unit 603 does not activate the first measurement function on the second node side or a measurement result of a primary cell on the first node side is less than the first measurement threshold value, the control unit 603 does not activate the first measurement function on the first node side, herein, if the first measurement function is in an inactive state, the terminal device performs a measurement of a neighbor cell of an inter-frequency cell, an intra-frequency cell, and an inter-RAT.

In an implementation, the first node is a master node in a DC network, and the second node is a secondary node in the DC network; or, the first node is a secondary node in a DC network, and the second node is a master node in the DC network.

In another implementation, the receiving unit 601 is configured to receive the first configuration information sent from the first node and the second configuration information sent from the second node.

The determination unit 602 is configured to determine a third measurement threshold value based on the first configuration information and/or the second configuration information.

The control unit 603 is configured to deactivate the first measurement function on the second node side if measurement results of a serving cell and a non-serving cell on the first node side are both less than the third measurement threshold value; herein, after the first measurement function is deactivated, the terminal device performs a measurement of a neighbor cell of an inter-frequency cell, an intra-frequency cells, and an inter-RAT.

In an implementation, the first configuration information includes a first measurement threshold value, and the second configuration information includes a second measurement threshold value. If measurement results of a serving cell and a non-serving cell on the first node side are both less than the third measurement threshold value, the control unit 603 deactivates the first measurement function on the second node side regardless of whether a measurement result of a primary cell on the second node side is greater than or equal to the second measurement threshold value, or less than the second measurement threshold value.

In an implementation, the first node is a master node in a DC network, and the second node is a secondary node in the DC network; or, the first node is a secondary node in a DC network, and the second node is a master node in the DC network.

Those skilled in the art should understand that relevant descriptions of the apparatus for controlling measurement of the embodiment of the present application may be understood with reference to relevant descriptions of the method for controlling measurement of the embodiment of the present application.

FIG. 7 is a schematic diagram of a structure of a terminal device 600 according to an embodiment of the present application. The terminal device 600 shown in FIG. 7 includes a processor 610, and the processor 610 may call and run a computer program from a memory to implement the method in the embodiment of the present application.

Optionally, as shown in FIG. 7, the terminal device 600 may further include a memory 620. The processor 610 may call and run a computer program from the memory 620 to implement the method in the embodiment of the present application.

The memory 620 may be a separate device independent of the processor 610 or may be integrated in the processor 610.

Optionally, as shown in FIG. 7, the terminal device 600 may further include a transceiver 630, and the processor 610 may control the transceiver 630 to communicate with other devices. Specifically, the transceiver 630 may send information or data to other devices or receive information or data sent from other devices.

The transceiver 630 may include a transmitter and a receiver. The transceiver 630 may further include antennas, and a number of antennas may be one or more.

Optionally, the terminal device 600 may be a network device of the embodiment of the present application, and the terminal device 600 may implement the corresponding processes implemented by the network device in various methods of the embodiments of the present application, which will not be repeated herein for brevity.

Optionally, the terminal device 600 may be specifically a mobile terminal/terminal device of the embodiments of the present application, and the terminal device 600 may implement the corresponding processes implemented by the mobile terminal/terminal device in the various methods of the embodiments of the present application, which will not be repeated herein for brevity.

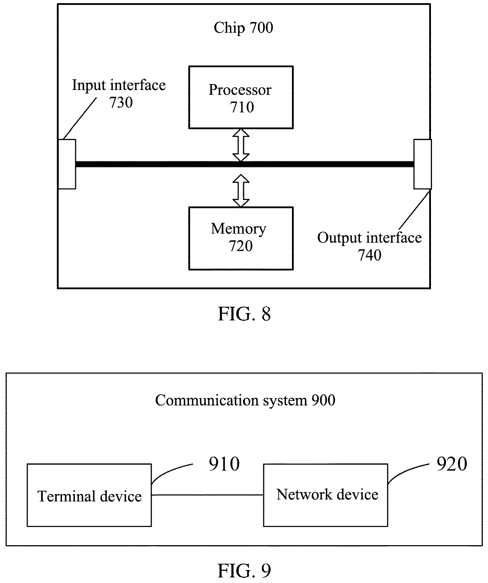

FIG. 8 is a schematic diagram of a structure of a chip according to an embodiment of the present application. A chip 700 shown in FIG. 8 includes a processor 710. The processor 710 may call and run a computer program from a memory to implement the method in the embodiment of the present application.

Optionally, as shown in FIG. 8, the chip 700 may further include a memory 720. The processor 710 may call and run a computer program from the memory 720 to implement the method in the embodiment of the present application.

The memory 720 may be a separate device independent of the processor 710 or may be integrated in the processor 710.

Optionally, the chip 700 may further include an input interface 730. The processor 710 may control the input interface 730 to communicate with other devices or chips. Specifically, the processor 710 may acquire information or data sent from other devices or chips.

Optionally, the chip 700 may further include an output interface 740. The processor 710 may control the output interface 740 to communicate with other devices or chips. Specifically, the processor 710 may output information or data to other devices or chips.

Optionally, the chip may be applied in a network device of the embodiment of the present application, and the chip may implement the corresponding processes implemented by the network device in various methods of the embodiments of the present application, which will not be repeated herein for brevity.

Optionally, the chip may be applied in a mobile terminal/terminal device of the embodiment of the present application, and the chip may implement the corresponding processes implemented by the mobile terminal/terminal device in the various methods of the embodiments of the present application, which will not be repeated herein for brevity.

It should be understood that the chip mentioned in the embodiment of the present application may be referred to as a system-level chip, a system chip, a chip system or a system-on-chip, etc.

FIG. 9 is a schematic block diagram of a communication system 900 according to an embodiment of the present application. As shown in FIG. 9, the communication system 900 may include a terminal device 910 and a network device 920.

Herein, the terminal device 910 may be configured to implement the corresponding functions implemented by the terminal device in the above-mentioned method, and the network device 920 may be configured to implement the corresponding functions implemented by the network device in the above-mentioned method, which will not be repeated herein for brevity.

It should be understood that, the processor in the embodiment of the present application may be an integrated circuit chip having a signal processing capability. In an implementation process, steps of the foregoing method embodiments may be implemented by using an integrated logic circuit of hardware in the processor or instructions in a form of software. The processor may be a general purpose processor, a digital signal processor (DSP), an application specific integrated circuit (ASIC), a field programmable gate array (FPGA) or other programmable logic device, a discrete gate or a transistor logic device, or a discrete hardware component. The processor may implement or perform methods, steps and logical block diagrams disclosed in the embodiment of the present application. The general purpose processor may be a microprocessor, or the processor may alternatively be any conventional processor, or the like. The steps of the method disclosed with reference to the embodiment of the present application may be directly implemented by a hardware decoding processor, or may be implemented by a combination of hardware and software modules in the decoding processor. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

It may be understood that, the memory in the embodiment of the present application may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. Through exemplary but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct rambus dynamic random access memory (DR RAM). It should be noted that the memory in the systems and methods described in the document is intended to include, but are not limited to, these and any memory of other proper types.

It should be understood that, the foregoing memory is an example for illustration and should not be construed as limiting. For example, optionally, the memory in the embodiments of the present application may be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Direct Rambus RAM (DR RAM), or the like. That is, memories in the embodiments of the present application are intended to include, but are not limited to, these and any other suitable types of memories.

An embodiment of the present application further provides a computer readable storage medium configured to store a computer program.

Optionally, the computer readable storage medium may be applied in a network device of the embodiment of the present application, and the computer program enables the computer to perform the corresponding processes implemented by the network device in various methods of the embodiments of the present application, which will not be repeated herein for brevity.

Optionally, the computer readable storage medium may be applied in a mobile terminal/terminal device of the embodiment of the present application, and the computer program enables the computer to perform the corresponding processes implemented by the mobile terminal/terminal device in various methods of the embodiments of the present application, which will not be repeated herein for brevity.

An embodiment of the present application also provides a computer program product including computer program instructions.

Optionally, the computer program product may be applied in a network device of the embodiment of the present application, and the computer program instructions enable the computer to perform the corresponding processes implemented by the network device in various methods of the embodiments of the present application, which will not be repeated herein for brevity.

Optionally, the computer program product may be applied in a mobile terminal/terminal device of the embodiment of the present application, and the computer program instructions enable the computer to perform the corresponding processes implemented by the mobile terminal/terminal device in various methods according to the embodiments of the present application, which will not be repeated herein for brevity.

An embodiment of the present application also provides a computer program.

Optionally, the computer program may be applied in a network device of the embodiment of the present application. When the computer program is run on the computer, the computer is enabled to perform the corresponding processes implemented by the network device in various methods of the embodiments of the present application, which will not be repeated herein for brevity.

Optionally, the computer program may be applied in a mobile terminal/terminal device of the embodiment of the present application. When the computer program is run on the computer, the computer is enabled to perform the corresponding processes implemented by the mobile terminal/terminal device in various methods of the embodiments of the present application, which will not be repeated herein for brevity.

A person of ordinary skill in the art may be aware that, units and algorithm steps of examples described in combination with the embodiments disclosed in the document may be implemented by using electronic hardware or a combination of computer software and electronic hardware. Whether the functions are implemented by using hardware or software depends on a particular application and a design constraint condition of the technical solution. A person skilled in the art may use different methods to implement the described functions for each particular application, which should not be considered as beyond the scope of the present application.

A person skilled in the art may clearly understand that, for the purpose of convenient and brief description, a detailed working process of the foregoing system, apparatus, and unit, may refer to a corresponding process in the foregoing method embodiments, which is not repeated herein again.

In the several embodiments provided in the present application, it should be understood that the disclosed system, apparatus, and method may be implemented in other manners. The apparatus embodiments are only illustrative, for example, division of the units is only a logical function division, and there may be other division modes in actual realization. For example, multiple units or components may be combined or integrated into another system, or some features may be ignored or not executed. In addition, the displayed or discussed mutual coupling or direct coupling or communication connection may be implemented by using some interfaces. The indirect coupling or communication connection between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of the embodiments.

In addition, various functional units in various embodiments of the present application may be integrated in one processing unit, or various units may be physically present separately, or two or more units may be integrated in one unit.

When the functions are implemented in the form of software functional units and sold or used as an independent product, the software functional units may be stored in a computer-readable storage medium. Based on such an understanding, the technical solutions of the present application essentially, or the part contributing to the prior art, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of the present application. The foregoing storage medium includes: any medium that is capable of storing program code, such as a USB flash drive, a removable hard disk, a read-only memory (ROM), a random access memory (RAM), a magnetic disk, or an optical disc.

The foregoing descriptions are merely specific implementations of the present application, but are not intended to limit the protection scope of the present application. Any variation or substitution readily conceived by a person skilled in the art within the technical scope disclosed in the present application shall fall within the protection scope of the present application. Therefore, the protection scope of the present application shall be subject to the protection scope of the claims.

## Claims

1. A method for controlling measurement, comprising:
receiving, by a terminal device, first configuration information sent from a first node and second configuration information sent from a second node;
wherein under a condition that the terminal device determines, based on the first configuration information and/or the second configuration information, that the first node receives measurement request configuration information from the second node:
only when the terminal device activates a first measurement function on the second node side, the terminal device is able to activate the first measurement function on the first node side; wherein when the first measurement function is in an active state, the terminal device performs a measurement of a serving cell, and does not perform a measurement of a neighbor cell of an inter-frequency cell, an intra-frequency cell, and an inter-Radio Access Technology (RAT).

2. The method of claim 1, wherein the first configuration information comprises a first measurement threshold value and the second configuration information comprises a second measurement threshold value;
when the terminal device activates the first measurement function on the second node side, the terminal device is able to activate the first measurement function on the first node side only when a measurement result of a primary cell on the first node side is greater than or equal to the first measurement threshold.

3. The method of claim 2, further comprising:
when the terminal device does not activate the first measurement function on the second node side or the measurement result of the primary cell on the first node side is less than the first measurement threshold value, not activating, by the terminal device, the first measurement function on the first node side;
wherein, when the first measurement function is in an inactive state, the terminal device performs the measurement of the neighbor cell of the inter-frequency cell, the intra-frequency cell, and the inter-RAT.

4. The method of any one of claims 1 to 3, wherein the first node is a master node in a Dual Connectivity (DC) network, and the second node is a secondary node in the DC network; or,
the first node is a secondary node in a DC network, and the second node is a master node in the DC network.

5. A method for controlling measurement, comprising:
receiving, by a terminal device, first configuration information sent from a first node and second configuration information sent from a second node;
determining, by the terminal device, a third measurement threshold value based on the first configuration information and/or the second configuration information; and
deactivating a first measurement function on the second node side when measurement results of a serving cell and a non-serving cell on the first node side are both less than the third measurement threshold value; wherein, after the first measurement function is deactivated, the terminal device performs a measurement of neighbor cell of an inter-frequency cell, an intra-frequency cell, and an inter-Radio Access Technology (RAT).

6. The method of claim 5, wherein the first configuration information comprises a first measurement threshold value and the second configuration information comprises a second measurement threshold value;
when the measurement results of the serving cell and the non-serving cell on the first node side are both less than the third measurement threshold, deactivating the first measurement function on the second node side regardless of whether a measurement result of a primary cell on the second node side is greater than or equal to the second measurement threshold value or less than the second measurement threshold value.

7. The method of claim 5 or 6, wherein
the first node is a master node in a Dual Connectivity (DC) network, and the second node is a secondary node in the DC network; or,
the first node is a secondary node in a DC network, and the second node is a mater node in the DC network.

8. An apparatus for controlling measurement, comprising:
a receiving unit, configured to receive first configuration information sent from a first node and second configuration information sent from a second node;
a determination unit, configured to determine that the first node receives measurement request configuration information from the second node based on the first configuration information and/or the second configuration information; and
a control unit, configured to be able to activate a first measurement function on the first node side only when the first measurement function on the second node side is activated; wherein, when the first measurement function is in an active state, the terminal device performs a measurement of a serving cell, and does not perform a measurement of a neighbor cell of an inter-frequency cell, an intra-frequency cell, and an inter-Radio Access Technology (RAT).

9. The apparatus of claim 8, wherein the first configuration information comprises a first measurement threshold value, and the second configuration information comprises a second measurement threshold value;
when the control unit activates the first measurement function on the second node side, the control unit is able to activate the first measurement function on the first node side only when a measurement result of a primary cell on the first node side is greater than or equal to the first measurement threshold value.

10. The apparatus of claim 9, wherein
the control unit does not activate the first measurement function on the first node side when the control unit does not activate the first measurement function on the second node side or the measurement result of the primary cell on the first node side is less than the first measurement threshold value;
wherein, when the first measurement function is in an inactive state, the terminal device performs the measurement of the neighbor cell of the inter-frequency cell, the intra-frequency cell, and the inter-RAT.

11. The apparatus of any one of claims 8 to 10, wherein
the first node is a master node in a Dual Connectivity (DC) network, and the second node is a secondary node in the DC network; or,
the first node is a secondary node in a DC network, and the second node is a master node in the DC network.

12. An apparatus for controlling measurement, comprising:
a receiving unit, configured to receive first configuration information sent from a first node and second configuration information sent from a second node;
a determination unit, configured to determine a third measurement threshold value based on the first configuration information and/or the second configuration information; and
a control unit, configured to deactivate a first measurement function on the second node side when measurement results of a serving cell and a non-serving cell on the first node side are both less than the third measurement threshold; wherein, after the first measurement function is deactivated, the terminal device performs a measurement of a neighbor cell of an inter-frequency cell, an intra-frequency cell, and an inter-Radio Access Technology (RAT).

13. The apparatus of claim 12, wherein the first configuration information comprises a first measurement threshold value, and the second configuration information comprises a second measurement threshold value;
when the measurement results of the serving cell and the non-serving cell on the first node side are both less than the third measurement threshold, the control unit deactivates the first measurement function on the second node side regardless of whether a measurement result of a primary cell on the second node side is greater than or equal to the second measurement threshold value or less than the second measurement threshold value.

14. The apparatus of claim 13, wherein
the first node is a master node in a Dual Connectivity (DC) network, and the second node is a secondary node in the DC network; or,
the first node is a secondary node in a DC network, and the second node is a master node in the DC network.

15. A terminal device comprising: a processor and a memory, the memory is configured to store a computer program, and the processor is configured to call and run the computer program stored in the memory to perform the method according to any one of claims 1 to 4 or any one of claims 5 to 7.

16. A chip comprising: a processor configured to call and run a computer program from a memory to cause a device provided with the chip to perform the method according to any one of claims 1 to 4 or any one of claims 5 to 7.

17. A computer readable storage medium storing a computer program, wherein the computer program causes a computer to perform the method according to any one of claims 1 to 4 or any one of claims 5 to 7.

18. A computer program product comprising computer program instructions, wherein the computer program instructions cause a computer to perform the method according to any one of claims 1 to 4 or any one of claims 5 to 7.

19. A computer program, wherein the computer program causes a computer to perform the method according to any one of claims 1 to 4 or any one of claims 5 to 7.
